Europäisches Patentamt

European Patent Office

Office européen des brevets

(19)

(11) Publication number: **0 004 696**
**B1**

(12) **EUROPEAN PATENT SPECIFICATION**

(45) Date of publication of patent specification: **30.06.82**

(21) Application number: **79300061.3**

(22) Date of filing: **15.01.79**

(51) Int. Cl.³: **F 16 L  21/00, F 16 B  4/00, B 23 P  11/02**

(54) **Ultra high vacuum seal arrangement.**

(30) Priority: **30.03.78 US  891675**
**30.03.78 US  891797**

(43) Date of publication of application:
**17.10.79 Bulletin 79/21**

(45) Publication of the grant of the patent:
**30.06.82 Bulletin 82/26**

(84) Designated Contracting States:
**DE FR GB IT**

(56) References cited:
**GB - A - 1 488 393**
**US - A - 4 035 007**

(73) Proprietor: **WESTINGHOUSE ELECTRIC CORPORATION**
**Westinghouse Building Gateway Center**
**Pittsburgh Pennsylvania 15222 (US)**

(72) Inventor: **Flaherty, Robert**
**145 Crestvue Manor Drive**
**Pittsburgh Pennsylvania (US)**
Inventor: **Kim, Chang-Kyo**
**5421 Brown-Atkins Drive**
**Knoxville Tennessee (US)**

(74) Representative: **van Berlyn, Ronald Gilbert**
**23, Centre Heights**
**London, NW3 6JG (GB)**

Courier Press, Leamington Spa, England.

This invention was made or conceived in the course of or under contract No. E(11—1)—3073, Subcontract 192 with the United States Department of Energy.

This invention relates to seals for ultra high vacuum systems, those operating in a pressure range below $13 \times 10^{-6}$ kg/m$^2$, and specifically to remotely actuatable removable seals for joining tubes in such systems.

In assembling ultra high vacuum (UHV) systems, those systems operating at pressures below approximately $13 \times 10^{-6}$ kg/m$^2$, seals and closures have presented challenging problems. For such systems, rubbers and elastomers are not suitable as seals as they are permeable to gases to an extent such that very low base pressures cannot be attained and such seals typically cannot survive the high temperatures often necessary to bake out vacuum systems. When frequent separation of a joint is not a requirement, multipass tungsten-inert-gas (TIG) or metal-inert-gas (MIG) welding is often preferred to a demountable closure. When frequent separation or proximity of heat sensitive materials makes welding impractical, plastically deformed metal seals are satisfactory. The seals, however, require very rigid flanges and many closely spaced bolts to accomplish a sufficiently tight seal, and assembly and disassembly are time consuming, especially if these operations must be performed remotely. Nevertheless, plastically deformed metal seals such as gold wire and flat copper washers are the most reliable seals and are used almost universally in UHV work. Many styles have been developed, from laboratory fabricated special seals to commercially available standardized seals. The successful UHV seals all have two characteristics in common; (1) at least one of the sealing surfaces is plastically deformed, and (2) there is no relative motion between the sealing surfaces.

It is desirable to provide a seal which possesses, in addition to these two characteristics, the ability for remote actuation, installation and removal.

Additionally, where it is necessary to demountably seal large cylindrical components in a UHV environment, for example, those having diameters of several feet or more, the operational concerns are magnified, particularly where remote assembly and disassembly are required. Separating forces between the seal and the UHV system components can be large as a result of the weight of the seal members, and can be beyond the capability of force-sensitive remote actuators or manipulators. The separating forces may, of necessity, be applied through complex structures such as piping, vacuum shells and expansion joints, which are made more costly, more complicated, and less reliable by this additional function imposed upon them. Further, the sealing surfaces may be severely damaged locally by sliding them while loaded by the dead weight of the bulky seal members. Resulting repair or replacement of the seal and component surfaces can be difficult, slow and costly because of the large size of the components involved.

In metallurgy there exist high strength metal alloys which exhibit unique "memory" characteristics when undergoing a transformation between martensitic and austenitic states. The alloys can, for example, be machined in a high temperature austenitic geometry, cooled through a phase transformation to a weaker martensitic state, deformed and, upon heating through the same phase transformation temperature range, return substantially to the original austenitic geometry. If restrained from returning to the original geometry the alloys develop internal stresses consistent with the strain between the original "remembered" geometry and the restrained configuration imposed upon the alloys.

Among the alloys exhibiting these characteristics are various combinations of gold and cadmium, copper and zinc, indium and thallium, copper and tin, as well as nickel and titanium, among others, the latter being commonly referred to as Nitinol which is commercially available from the Raychem Corporation. The nickel-titanium alloys also can incorporate smaller amounts of other elements. Alloys generally exhibiting memory characteristics are also referred to as "heat recoverable" since they require heat to effect the crystallographic phase transformation necessary to recover their shape. Additional detail regarding such nickel-titanium alloys is found in U.S. Patent 3,174,851.

Also available from the Raychem Corporation are Cryocon® electrical connectors and Cryofit® piping connectors, utilizing Nitinol alloys. The Cryofit connector is essentially a sleeve of Nitinol, having internal seal ridges in series, which is bored in the austenitic phase to a diameter less than the outside diameter of pipes to be joined, then chilled and transformed to martensite, and mechanically expanded to a diameter greater than the outside diameter of pipes to be joined. The connector can be slipped over the pipes, heated and transformed to austenite, whereby a hoop stress presses the series of seal ridges into the outer surfaces of the pipes making an excellent pipe and hydraulic connection. The ridges, however, while forming a seal, are inconsistent with UHV applications, and may locally deform the joined pipes to a degree inconsistent with reuse of the connector for substantial sealing. Seal surfaces in series also raise concerns regarding virtual leaks.

It is the principal object of the present invention to provide a sealing arrangement for application in ultra high vacuum system components which does not require mechanical actuators and which can be remotely installed, actuated, released and returned approximately to its pre-installation configuration having sufficient clearance to facilitate removal and replacement without damage to the seal or the system components.

With this object in view, the present invention resides in a sealing arrangement for sealing two coaxial longitudinally aligned metallic tubes in an ultra-high vacuum system comprising a tubular seal formed of a heat recoverable metallic material and extending axially over the end portions of the aligned tubes, said tubular seal having integral protruding circumferential lips so sized that they engage said coaxial tubes upon transformation of said tubular seal from a martensitic to austenitic state, characterized in that said tubular seal consists of a membrane portion having reacting ring portions, formed at the ends of said membrane portion in planar alignment with said lips but on the radially opposite side, said reacting ring portions having a thickness greater than the intermediate membrane portion of said seal so as to be capable of providing a pressure sufficient to plastically deform the tube portions engaged by said lips.

The seal ridges can be oriented either within or about the seal rings dependent upon whether the seal is respectively disposed externally or internally of the concentric tubes.

The seal is preferably machined to the described configuration in its austenitic state. Subsequently the seal is cooled below its transformation temperature range which transforms it to martensite. Martensite exhibits lower strength characteristics than the austenite. The seal, in the martensitic state, is then placed in a die and diametrically expanded, such as by hydraulic or other known methods, into contact with a specifically sized die. The tubes to be joined are inserted into the tubular seal to a selected depth, and the seal is heated, remotely or otherwise, through the transition temperature range so as to return it to the stronger "remembered" austenitic state. The circumferential lips exert sufficient force to plastically deform the concentric metallic tubes, forming a reliable UHV seal.

For disassembly of the joint, the seal is again cooled below its transition temperature such that it becomes stress-free martensite at its existing dimensions, and relieves the sealing force upon the tubes. The tubes can then be slid apart. The keying effect of the martensitic lip in the annular grooves of the plastically deformed metallic tube can be alleviated by differentially cooling the metallic tube to release the interference and provide clearance for disassembly. The tubular seal can be stored in its cold martensitic condition and subsequently re-expanded and re-installed, the processes and transformations being repeatable to a degree consistent with such reusable application.

In another embodiment, a double-acting tubular seal is utilized. As utilized for external application, the seal includes two concentric rings, the outer ring having a slightly greater cross section than the inner ring. Both rings are made of an alloy as discussed above. The outer, or driver ring, is machined in the austenitic condition to an inside diameter approximately five percent smaller than its installed inside diameter. It is chilled to transform it to martensite and then expanded, hydraulically or otherwise, approximately ten percent. The inner, or sealing ring, is machined in the austenitic condition with a circumferential seal lip approximately five percent larger than the outside diameter of the tubes to be sealed. The outside diameter of the sealing ring is machined to be slightly smaller, for example, a fraction of one percent, than the inside diameter of the driver ring. The sealing ring is chilled to transform it to martensite, then fitted inside the driver ring. The assembly can be stored in the chilled martensitic condition until it is to be installed.

At installation the seal assembly is slipped over the ends of the tubes, with about five percent total clearance. The sealing ring is kept chilled, in the martensitic state, while the driver ring is heated, transforming it to the austenitic state so that the driver compresses the sealing ring about five percent, forcing contact of the seal lips with the tubes. The sealing ring and lip are then heated and transformed into the higher strength austenite. A contraction of the driver ring continues and loads the sealing ring. It continues to compress the sealing ring until fully transformed, thereby plastically deforming the tubes circumferentially at the contact of the lip and tube.

In the sealed configuration, both the sealing ring and driver ring are austenitic. The hoop tension force in the driver ring is sufficiently great, because of its greater cross section, to offset the hoop compression force in the sealing ring and still provide a radially inward load on the seal lip.

To disassemble the seal, both rings ars chilled into the martensitic state. The roles of the driver and sealing rings are now reversed. The inner ring is warmed and transformed to austenite first, stretching the outer ring while it is still in the low strength martensitic condition. The pair of rings thus return to approximately their pre-installation dimensions, except that the initial assembly clearance between them has disappeared. The seal lip diameter is now approximately five percent greater than the outside diameter of the tube end. By cradling the driver ring at, for example, three points on a circle less than five percent eccentric from the tubes, there will be no contact between the sealing ring and the tube end. The seal assembly can be re-installed in the same manner in which the original installation was made if the tube rings are kept in the martensitic state until re-installation takes place.

The invention will become more readily apparent from the following description of preferred embodiments thereof shown, by example only, in the accompanying drawings, in which:

Figure 1 is a partial-section view of an ultra high vacuum (UHV) seal in accordance with one embodiment of the invention in the operating configuration;

Figure 2 is a view taken at II—II of Figure 1;

Figure 3 is a cross-section view of a portion of the seal of Figure 1 in an as-machined, uninstalled condition;

Figure 4A is a partial-section view of a UHV seal in an as-machined configuration;

Figure 4B is a partial section view of a UHV seal in an as mechanically expanded orientation;

Figure 5 is a sectional view of a double-acting UHV seal in accordance with another embodiment;

Figure 6 is a view taken at VI—VI of Figure 5;

Figures 7A through 7G schematically illustrate the assembly and installation procedure of the seal of Figure 5;

Figures 8A through 8C schematically illustrate the disassembly procedure of the seal of Figure 7G;

Figure 9 is a sectional view of an exemplary UHV seal in accordance with the invention;

Figure 10 is a sectional view of a UHV seal disposed internally of two tubes in a UHV system;

Figure 11 is a cross-sectional view of another embodiment showing a sealing arrangement in an installed configuration;

Figure 12 is a cross-sectional view showing the sealing arrangement of Figure 11 in a sealed configuration;

Figure 13 is a cross-sectional view showing still another sealing arrangement in an installed configuration;

Figure 14 is a cross-sectional view of a slightly modified sealing arrangement in the sealing state.

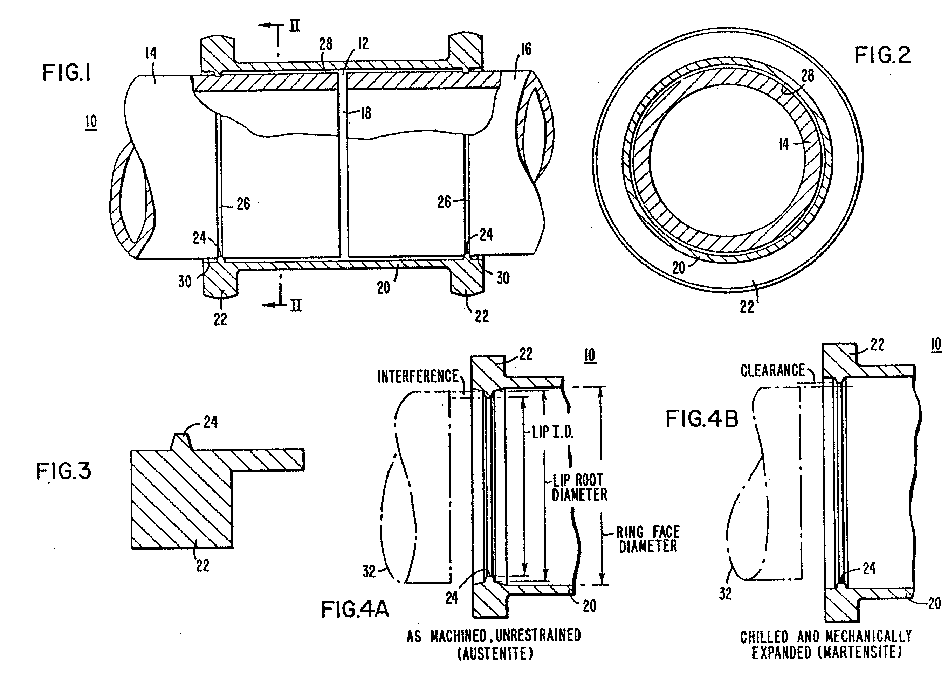

Referring now to Figures 1 and 2 there is shown an ultra high vacuum (UHV) seal 10 in the operating orientation, sealing the juncture region 12 of two concentric tubes 14 and 16. Concentric, as used throughout the specification and the appended claims, refers to plural tubular components having axial center lines which are longitudinally aligned, either directly upon each other or through extensions of each. The tubular components, therefore, may abut one another, be partially contained one within the other, or spaced from one another. An example of the latter, the spaced orientation, is shown in Figures 1 and 2, a space 18 separating the tubes 14 and 16.

The seal 10 is preferably made of an alloy comprised of nickel and titanium, having high strength and the unique "memory" characteristics described above and well known in the art. It should be recognized that the various alloys, hereinafter referred to as Nitinol and as heat recoverable, can be provided with a transition temperature range compatible with, that is, sufficiently above or below, the operating temperature of the specific UHV system to which the seal is to be applied. A typical exemplary Nitinol alloy is composed of fifty-five weight percent nickel and forty-five percent titanium.

The seal 10 is an integral structure which includes a tubular membrane 20 and two reacting rings 22, each reacting ring having a circumferential protruding seal lip 24. The integral seal 10 can be roughly formed, heated to above its transition temperature range, and machined in the stronger austenitic state. The reacting rings are initially machined to preferably a rectangular cross section, as shown in Figure 3, and are of larger cross-sectional area than the membrane 20. After machining the seal 10 is cooled below its transformation temperature range, thereby being transformed to martensite of relatively low strength. From the inside, the seal is then expanded to an inside diameter larger than the tubes 14, 16 outside diameter, through, for example, hydraulic or other means known in the art, into contact with a specifically sized die which is preferably chilled. A split-ring die can beneficially be utilized during this expansion to support the membrane 20 of the seal 10. The seal, so-fabricated, can be stored in the martensitic condition until it is to be installed.

For installation, the tubes 14, 16 to be joined are inserted into the seal 10. The depth of insertion can be varied; however, the membrane 20 should be sufficiently long and the insertion sufficiently deep to avoid buckling of the end of a tube 14, 16 upon application of pressure by the seal 10. Alternatively, the tube ends can be reinforced. Additionally, as discussed further below, a space 12 between the tube 14, 16 ends is desirable to avoid virtual leaks. Subsequent to insertion the seal is heated through its transition temperature range. The lips 24 are accordingly circumferentially contacted with the tubes and then loaded as the seal 10 transforms to its austenitic phase and tends towards its austenitic free configuration. The loading, resulting from the energetic dimensional and stress changes of the martensite to austenite transformation, is sufficient to plastically deform the tubes 14, 16 as shown by the circumferential grooves or ridges 26. The loading also causes deformation of the reacting rings 22 from the configuration shown in Figure 3 to the configuration shown in Figures 1 and 2.

The installed configuration shown also alleviates the possibility of virtual leaks, since there is only one sealing area on each of the tubes being sealed. Gas trapped between seals in series may slowly escape to a UHV system, becoming a virtual leak which is very difficult to locate, and such possibilities are eliminated in the arrangement shown. In the disclosed arrangement, the annular channel 28 leading to each seal lip from the vacuum side is open to permit rapid pumping of this volume and prompt detection of a tracer gas if a seal leak exists. The channel 30 leading to the seal from the atmospheric side is also open to permit easy introduction of a tracer gas to the sealed areas.

To disassemble the joint, the seal 10 is again cooled below its transition temperature, so as to become stress-free martensite at its existing dimensions. The joint can then be slid apart, unless the keying effect of the seal lips 24 in the plastically deformed annular ridges 26 is substantially resistive. In that event, differentially cooling the stainless steel tubes will release the interference, and further cooling will provide clearance for disassembly. This can be performed merely by passing a cold liquid through the interior of the tubes.

Example

The left-hand portion of Figure 4 shows a specific seal 10 in the as-machined austenitic condition, and the right-hand portion shows the same seal in its chilled and mechanically expanded martensitic condition, prior to installation. The seal forms a joint between two sections of 3 inch O.D., AISI 305 stainless steel tubing 32 with 0.3 inch thick walls.

The seal lips 24 are 1/4 mm wide. With a seal load of 750 kg per lineal cm of seal, the surface compressive strength between the lips is 100 kg/mm$^2$ which is approximately the yield strength of AISI 305 stainless steel following 15 percent cold reduction, and is within the safe loading limits for this material.

A seal load of 750 kg per lineal cm is chosen for exemplary purposes since testing of hydraulically loaded prior art seals has shown that a force of 450 kg per cm of seal length causes sufficient plastic deformation to make a consistent seal between stainless steel and "hard" copper. The soft component of this prior art seal is the copper, 87—108 BHN. In a seal between AISI 305, 80$R_B$ and Nitinol, 79.5$R_B$ there is no soft component, both surfaces being approximately 144 BHN (Brinnell hardness number). Deformation with the exemplary seal equivalent to that in the copper-stainless steel combination will occur when the load is about 750 kg per lineal cm, i.e., when the load is scaled upward in proportion to the Brinnel hardness.

For pipes 32 with unstiffened ends, the distance between the seal lips is preferably slightly greater than twice the characteristic attenuation length (l) of the pipe, defined as

$$l = \frac{5\pi}{4\lambda} \qquad (1)$$

Where the wavelength $\lambda$ in the exemplary tubing

$$\lambda = \sqrt[4]{\frac{3(1-\nu^2)}{R^2 t^2}} = 5 \text{ reciprocal cm} \quad (2)$$

R is the tube inside radius, t is the tube wall thickness and $\nu$ is Poissons ratio. The seal rings are therefore spaced approximately 10 cm

$$(2 \times \frac{5\pi}{4\lambda})$$

apart. For pipes with inconveniently long attenuation length, external or internal stiffening rings can advantageously be added to the tubes 32. Such stiffening rings should be proportioned to resist collapse as elastically unstable rings if they are loaded radially inward.

The radial displacement inward of the pipe wall as a result of seal loading must be small compared with the restrained cold deformation of the Nitinol reacting rings to maintain the radial force which in this instance is 0.0575 inches radially.

The radial displacement of the tube wall is

$$\Delta R = \frac{-pR^2\lambda}{2Et} = 0.0216 \text{ mm} \qquad (3)$$

Where p is the pressure between the seal ring and tube surface, R is the pipe initial external radius, and E is the modulus of elasticity of the pipe metal. Accordingly, the Nitinol ring has an unresolved deformation of 1.448 mm. This radial displacement is 1.47 percent of the restrained radial cold deformation.

The Nitinol reacting ring 22 is assumed to be restrained at 104 per cent of its free diameter at the seal lip (about 80 kg/mm$^2$ stress) but unrestrained at its faces. The stress distribution across the ring cross section is assumed to be linear, so that the mean stress is about 40 kg/mm$^2$. The cross section of the reacting ring is, in this example, square. Thus, from a force balance on the ring where F=pD and A=2t$^2$, the ring thickness is approximately one-half inch. Other nearly square rectangular shapes can be used if desirable to provide clearance with respect to other components, to use available stock sizes or to conserve Nitinol.

The Nitinol reacting ring is assumed to be machined at 100 percent of its free diameter, to be stretched to 109 percent, to spring back to 108 percent and at the seal to be restrained at 104 percent, which is 7.62 cm. These dimensions at the inside diameter of the seal lip are:

| | |
|---|---|
| Machined | 7.328 cm |
| Stretched | 7.986 |
| Relaxed | 7.910 |
| Reacted (4% strain) | 7.620 |

At the roots of the seal lips, these dimensions are:

| | |
|---|---|
| Machined | 7.632 |
| Stretched | 8.319 |
| Relaxed | 8.242 |
| Reacted (4% strain) | 7.938 |

And, at the faces of the reacting rings, which are not restrained, these diameters are:

| | |
|---|---|
| Machined | 7.938 |
| Stretched | 8.651 |
| Relaxed | 8.573 |
| Reacted (zero strain) | 7.938 |

The Nitinol membrane 20 which connects the reacting rings and is integral with them has the same dimensions as the faces. The thickness of this membrane can be varied, and in this example is set at 3.18 mm.

For the expansion operation, a 11.19 I.D. die would be utilized (8.65 cm+2×1.27 cm). The strength of the martensitic Nitinol is relatively low for small deformations up to about 10 percent, and the desired 9 percent strain can be reached with a corresponding stress of approximately 16 kg/mm$^2$. The pressure required to achieve the desired strain by typical hydraulic means is less than 4.8 kg/mm$^2$. While a split ring die or other supportive means may be desirable to support the thinner membrane 20 during expansion, such support may be unnecessary since martensitic Nitinol is elastic between about 16 kg/mm$^2$ and 240 kg/mm$^2$, and the stress in the membrane under the exemplary conditions reaches approximately 64 kg/mm$^2$.

Regarding the keying effect at disassembly, if the contact between the seal lip 24 and tube 32 is approximated as a cylinder upon a flat plate, the width of the contact is calculated to be 0.215 mm inch and the groove depth is 0.0064 mm. Therefore, even if this depth is all plastic flow and the groove this deep, differentially cooling the stainless steel by approximately 18°F, such as by passing a cool fluid through the tube 32, will release interference and further cooling provides clearance.

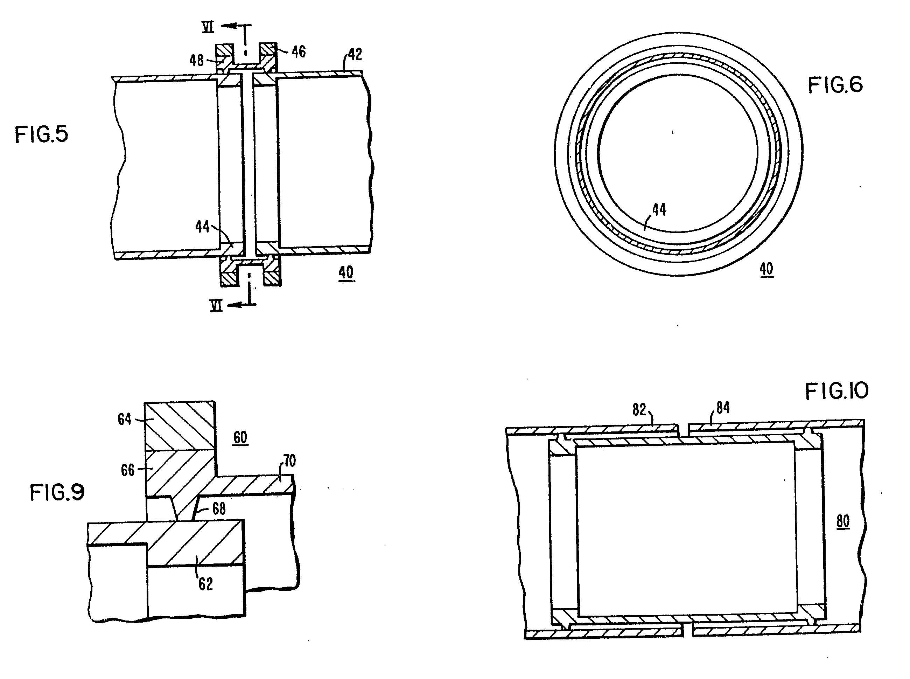

A double-acting Nitinol seal assembly 40, particularly suited to sealing large components with diameters of several feet or more, is shown in Figures 5 and 6 in an operating configuration, and the fabrication and installation sequence is schematically illustrated in Figures 7A through 7G. The vacuum tubes 42 are shown in Figures 5 and 6 with enlarged closure rings 44 to provide additional tube support.

The seal assembly 40 includes two concentric rings, the outer ring having a greater cross section than the inner ring. Both rings are made of Nitinol. The outer, or driver ring 46, is machined in the austenitic condition to an inside diameter approximately 5 percent smaller than its installed inside diameter (Figure 7A). It is chilled to transform it to martensite and then expanded, hydraulically or otherwise, approximately 10 percent (Figure 7B). The inner, or sealing ring 48, is machined in the austenitic condition with a seal lip 50 I.D. approximately 5 percent larger than the outside diameter of the tube 42 end. The outside diameter of the sealing ring 48 is machined to be slightly smaller than the inside diameter of the driver ring to facilitate initial assembly of the two rings (Figure 7C). The sealing ring 48 is chilled to transform it to martensite and then fitted inside the driver ring (Figure 7D). The assembly can be stored in the martensitic condition until it is to be installed.

At installation the seal assembly 40 is slipped over the tube end (Figure 7E) with about 5 percent total clearance. The sealing ring is kept chilled by means such as insulation or convection cooling, while the driver ring compresses it about 5 percent, forcing contact of the seal lip with the tube (Figure 7F). The seal lip 50 is then heated and transformed into the higher strength austenite by warming, such as by contact with the unchilled tube end. The contraction of the driver ring continues and loads the seal between the lip and tube. The contraction continues to compress the sealing ring until it is fully transformed and plastically deforms 52 the tube 42 (Figure 7G).

During service, both the sealing ring 48 and driver ring 46 are austenitic. The hoop tension force in the driver ring is sufficiently great, because of its greater cross section, to offset the hoop compression force in the sealing ring and still provide a radially inward load on the seal lip of, for example, 750 kg per lineal cm, which will result in a plastically deformed metal UHV seal.

To disassemble the seal (Figure 8A), both rings 46, 48 are chilled into the martensitic state (Figure 8B). The roles of the driver and sealing rings are now reversed. The inner ring 48 is warmed and transformed to austenite first, stretching the outer ring 46 while it is still in the low strength martensitic condition. The pair of rings thus return to approximately their pre-installation dimensions, except that the initial assembly clearance between them has disappeared (Figure 8C). The seal lip 50 diameter is now approximately 5 percent greater than the outside diameter of the tube end. If the driver ring is cradled 52 at three points on a circle less than approximately 5 percent eccentric from the tube 42 end, there will be no contact between the seal ring and the tube end.

The seal assembly can be stored, inspected and subsequently re-installed in the same manner in which the original installation was performed by maintaining the two rings in the martensitic state until re-installation takes place. The driver ring can include two separate rings as shown in Figure 5, or can be of other configurations such as a single ring of constant cross section or two enlarged rings joined by a membrane.

Example

Figure 9 shows a double-acting Nitinol seal 60 sized for the closure of the Tokamak Fusion Test Reactor (TFTR) vacuum vessel. The vessel closure ring is large, having an I.D. of 225 cm and an O.D. of 240 cm, and is designed to resist collapse under a seal load of 750 kg per lineal cm of seal length, with a safety factor of three; the radial thickness of this ring is limited to 7.6 cm by internal and external clearance requirements of the vacuum vessel, and its cross-sectional length in accordance with equations (1) and (2) is therefore 13.5 cm.

When the seal 60 is closed, the driver ring 64 is contracting inward to produce the seal load and to restrain the sealing ring, which is expanding outward.

When the seal 60 is opened, the austenitic sealing ring 66 presses outward against the driver ring 64 exerting a radial force resisted by the strength of the martensitic driver ring. Equilibrium is reached when the radial inward pressure of the larger low strength martensite band equals the radial outward pressure of the smaller austenite band, in which the compressive stress is decreasing as it expands. The initial clearance between the seal ring and the closure ring, approximately 5 percent of the closure ring diameter, is 97 percent recovered. If the seal is transformed to martensite, such as for storage and reapplication, it is initally unstressed martensite in a ring of stressed martensite. Further contraction will occur as a new force equilibrium is reached. The modulus of elasticity of the martensite phase is approximately 140000 $kg/cm^2$, and therefore the rings contract 0.3 percent, equal to approximately 6 percent of the initial clearance. Thus the seal ratchets inward 9 percent of the installation clearance with each cycle of use and, after seven cycles 52 percent of the original installation clearance is still available.

There have been described several specific configurations for UHV seals and methods for fabricating and installing the same. It will be recognized that alternative geometric configurations can be utilized. For example, the seal lip can be configured with a flat bottom, in a wedge shape, as a truncated wedge, and rounded, among other configurations. Additionally, all available grades of Nitinol can be utilized, differing primarily in the transformation temperature range of each. Further, rings of various dimensions operating to apply forces to each other and the components to be sealed can be arranged. Specifically, seals can be placed internally of the components as shown in Figure 10, wherein a seal 80 is disposed within two concentric metallic tubes 82, 84.

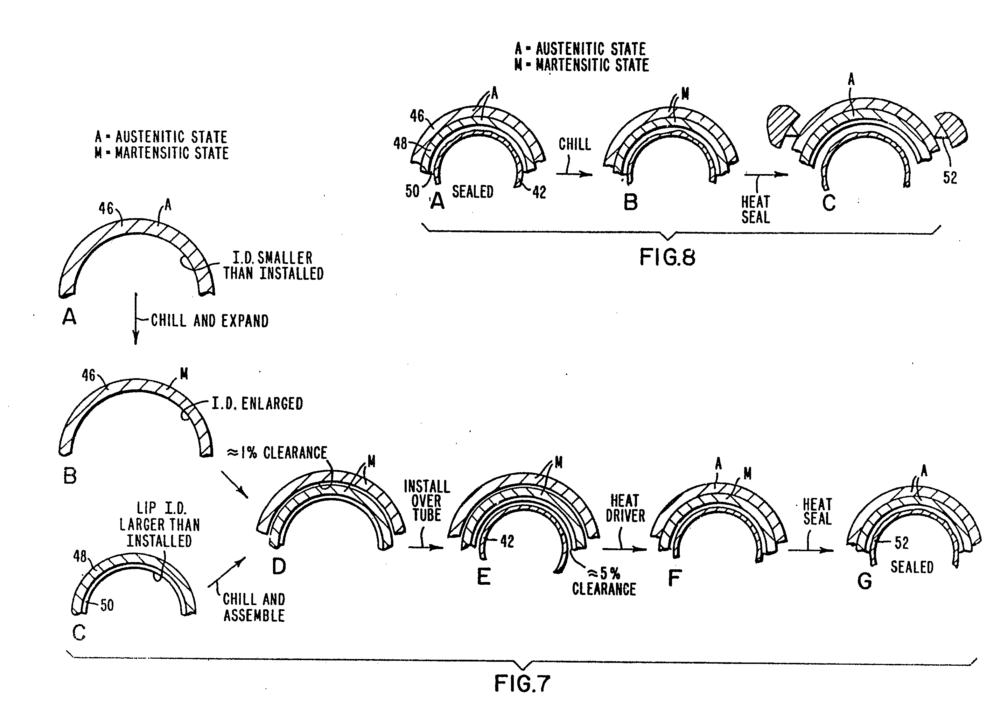

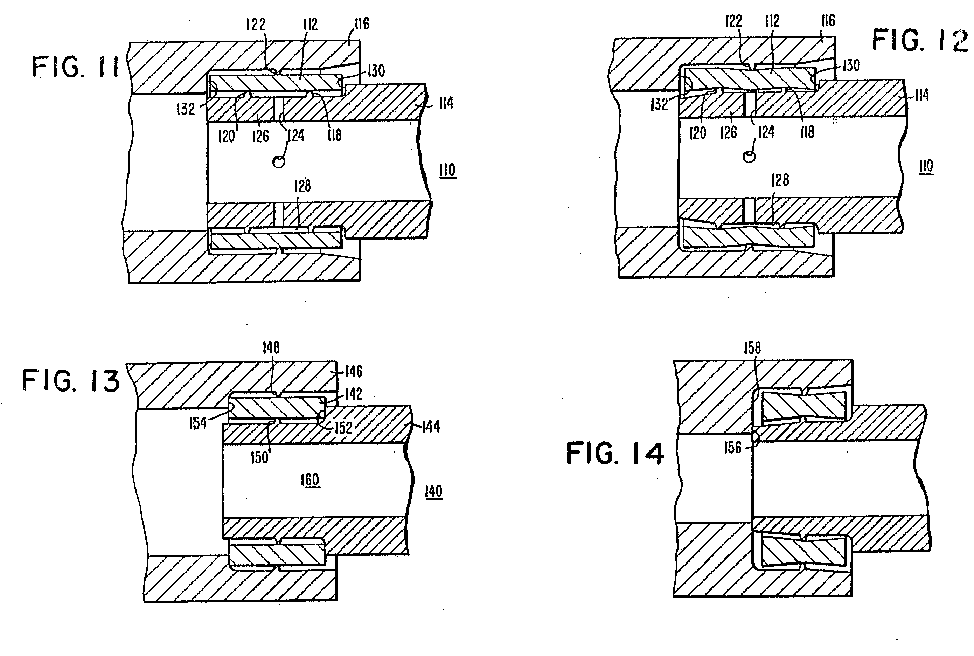

In an arrangement as shown in Figures 11 and 12, an all-metal ultra-high vacuum (UHV) O-ring seal arrangement 110 has an O-ring 112 with a strong tendency to increase in outside diameter and reduce in inside diameter. The seal ring is preferably fabricated with a tubular shape having an outside diameter approximately 2-1/2 percent larger and an inside diameter approximately 2-1/2 percent smaller than the surfaces against which the seal ring will seal, such as an inner metallic tube 114 and a concentric axially aligned outer metallic tube or sleeve 116. The seal ring 112 is then transformed to a relatively low strength martensite by chilling through the transformation temperature range of the heat-recoverable material of which it consists. While it remains in the martensitic temperature range it is stretched axially, as in a tensile test, approximately 10 percent. When a tube is strained axially in this manner, the mean diameter is unchanged, but the outside diameter is reduced and the inside diameter is increased, in this case approximately 5 percent of the radial thickness each. While still in the martensitic condition the tube is cut into short rings of given length by any process, well known in the art, which does not raise the metal temperature into the transformation range. The seal rings 112 can be stored at this low temperature until installation.

For installation, the seal ring 112 is placed between the tube ends 114, 116 which are preferably prechilled to the seal ring 112 temperature, with clearances approximately twice as large as would normally be provided for similar seal assemblies. The assembly is then allowed to warm through the transformation temperature range and, as the seal ring 112 transforms, its radial dimensional changes establish the seal zones.

While the seal ring can merely be so transformed so as to contact, plastically deform and circumferentially seal against the tubular surfaces, preferred orientations for UHV application seal against specific protruding circumferential rings. In Figures 11 and 12 the inner tube 114 is provided with two preferably integral external seal ridges 118 and 120, and the outer sleeve 116 is provided with a singular internal seal ridge 122. The seal ridges are oriented such that the internal seal ridge 122 is longitudinally positioned between the external seal ridges 118, 120. Additionally, radial holes 124 are provided through the wall 126 of the inner tube 114, also positioned longitudinally between the external seal ridges 118, 120, to provide fluid communication between an annular area 128 bounded by the external rings 118, 120 and the cylindrical surfaces of the seal ring 112 and inner tube 114 between the ridges 118, 120. The radial holes 124 allow the annulus 128 to be evacuated.

The seal ring 112, initially a short cylinder of uniform wall thickness (Figure 11) is of a length such that at an initial installation the ends of the seal ring are in contact with locating shoulders 130, 132 of the inner tube 114 and sleeve 116. With the sleeve internal sealing ridge 122 centered between the tube external sealing rings, this configuration forces the seal ring 112 to deflect under the seal loads rather than rotate about its centroid.

Another sealing arrangement 140 is shown in Figure 13. Here, a seal ring 142 is positioned between an inner tube 144 and outer tube 146, each of which has only one protruding sealing ridge. A protruding internal sealing ridge 148 on the sleeve is here positioned in the same plane as an external sealing ridge 150 on the inner tube. The alignment is arranged at installation by the contact of the ends of the seal ring with the shoulders 152, 154 of the tube and sleeve. While this arrangement provides a shorter and lighter seal ring, the seal rings 148, 150 must be properly aligned. The alignment of the seal rings 148, 150 can be further assured by contact between the tube end and the sleeve-locating shoulder as shown at 156 in Figure 14, but a virtual leak could result from the volume 158, through the contact 156, and into the ultra-high vacuum zone 160.

**Claims**

1. A sealing arrangement for sealing two coaxial longitudinally aligned metallic tubes in an ultra-high vacuum system comprising a tubular seal formed of a heat recoverable metallic material and extending axially over the end portions of the aligned tubes, said tubular seal having integral protruding circumferential lips so sized that they engage said coaxial tubes upon transformation of said tubular seal from a martensitic to austenitic state, characterized in that said tubular seal consists of a membrane portion (20) having reacting ring portions (22), formed at the ends of said membrane portion (20) in planar alignment with said lips (24) but on the radially opposite side, said reacting ring portions (22) having a thickness greater than the intermediate membrane (20) portion of said seal so as to be capable of providing a pressure sufficient to plastically deform the tube portions engaged by said lips (24).

2. An arrangement as claimed in claim 1, wherein said coaxial tubes have similar inside diameters, characterized in that said tubular seal is disposed within the end portions of said tubes (82, 84) with said lips circumferentially contacting inside surfaces of said tubes (82, 84).

3. An arrangement as claimed in any of claims 1 or 2 characterized in that driver rings (64) of a heat recoverable metallic material are disposed around said racting ring portions (66) and acting in unison with said reacting rings (66), said driver rings and reacting ring portions (64, 66) both when being in an austenitic state providing sufficient compression forces such that the sum of the forces is capable of forcing said lips (68) on said reacting ring (66) into said tubes (62) by plastically deforming said tubes (62) within said ring.

4. An apparatus as claimed in claim 3, characterized in that the ratio of the axial cross-sectional area of said driver rings (64) to said reacting rings (66) is approximately 2:1.

5. A sealing arrangement as claimed in claim 1, wherein one of said tubes extends into the other tube, characterized in that said one tube (114) has an outwardly protruding sealing lip (118, 120) and said other tube 116 has an inwardly protruding sealing lip (122), and a seal ring of a heat-recoverable metal is concentrically disposed between said one and the other tube.

6. A sealing arrangement as claimed in claim 5, characterized in that said one tube (114) has two radially outwardly protruding sealing lips (118, 120) positioned laterally on opposite sides of the radially inwardly extending sealing lip (122) of the other tube (116) and an opening (124) extends through the wall of said one tube (114) between said outwardly protruding sealing lips (118, 120); said seal ring (112) being concentrically disposed between said one and the other tube (114, 116) and extending axially beyond each of said outwardly protruding sealing lips (118, 120).

7. An arrangement as claimed in claim 6, characterized in that said other tube (114) has an internal shoulder (132) and said one tube has an external shoulder (130), said tubes (116, 114) being positionable such that said shoulders contact opposite ends of said seal ring (142) to properly position said seal ring (114).

8. A sealing arrangement as claimed in claim 5, characterized in that said inwardly and outwardly projecting seal lips (148, 150) are arranged in one plane.

**Patentansprüche**

1. Dichtungsanordnung zum Abdichten von zwei koaxialen Rohrleitungen in einem System mit extrem niedrigem Druck, die aus einer rohrförmigen Dichtung aus Temperaturumschlagbaren metallischen Material besteht und die axial die Enden koaxialer Rohrleitungen umfasst und mit ringförmigen Schneiden von solchen Abmessungen versehen ist, dass die Schneiden fest an den Rohrleitungen anliegen, wenn das Dichtungs-Material von einen martenitischen in einen austenitischen Zustand umschlägt, dadurch gekennzeichnet, dass die rohrförmige Dichtung aus einem dünnen Rohrstück (20) mit an den Enden angebrachten Reaktionsringen (22) besteht, die in einer Ebene mit den ringförmigen Schneiden (24) jedoch auf den gegenüber-liegenden Seiten der Rohre liegen, wobei die Reaktionsringe (22) grössere Wandstärken aufweisen als das dazwischenliegende Rohrstück (20) um dadurch einen für die Deformation der Rohrstück durch die ringförmigen Schneiden (24) ausreichenden Druck zu erzeugen.

2. Dichtungsanordnung nach Anspruch 1, wobei die koaxialen Rohrleitungen ähnliche Innenabmessungen haben, dadurch gekennzeichnet, dass die rohrförmige Dichtung innerhalb der Rohrenden der Rohrleitungen (82, 84) angeordnet ist, wobei die ringförmigen Schneiden mit ihren Kanten an der Innenseite der Rohrleitungen (82, 84) anliegen.

3. Dichtungsanordnung nach Anspruch 1 oder 2, dadurch gekennzeichnet, dass mit den Reaktionsringen (66) zusammenarbeitende Treibringe (64) aus temperaturumschlagbarem metallischem Material um die Reaktionsringe (66) angeordnet sind wobei die beiden Ringe (64, 66) gemeinsam im austenitischen Zustand die am Reaktionsring (66) angebrachten ringförmigen Schneiden plastisch deformierend in die Rohrleitung (62) antreibende Kräfte erzeugen.

4. Dichtungsanordnung nach Anspruch 3, dadurch gekennzeichnet, dass das Verhältnis der Querschnitts-flächen von Treibringen (64) zu Reaktionsringen (66) etwa. 2:1 ist.

5. Dichtungsanordnung nach Anspruch 1, wobei eines der Rohre sich in das andere hinein erstreckt, dadurch gekennzeichnet, dass das eine Rohr (114) eine nach aussen ragende Dichtungschneide (118, 120) und das andere Rohr (116) eine nach innen ragende Dichtungschneide (122) aufweist, und dass eine Dichtring (112) aus temperaturumschlagbarem Metall konzentrisch zwischen den beiden Rohren angeordnet ist.

6. Dichtungsanordnung nach Anspruch 5, dadurch gekennzeichnet, dass das eine Rohr (114) zwei nach aussen ragende Dichtschneiden (118, 120) aufweist, die axial auf gegenüberliegenden Seiten der radial nach innen gerichteten Dichtschneide (122) des anderen Rohres (116) angeordnet sind, und dass die Wand des einen Rohres (114) zwischen den nach aussen ragenden Dichtschneiden (118, 120) eine Oeffnung (124) aufweist, wobei der Dichtring (112) konzentrisch zwischen den Rohren (114, 116) angeordnet ist und sich in Achsrichtung über die nach aussen ragenden Dichtschneiden (118, 120) hinaus erstreckt.

7. Dichtungsanordnung nach Anspruch 6, dadurch gekennzeichnet, dass das andere Rohr (116) eine innere Schulter (132) und das eine Rohr (114) eine äussere Schulter (130) aufweisen und der Dichtring (142) zu einer Festlegung zwischen und in kontakt mit den Schultern gelagert ist.

8. Dichtungsanordnung nach Anspruch 5, dadurch gekennzeichnet, dass die nach innen und die nach aussen ragenden Dichtschneiden (148, 150) in einer Ebene angeordnet sind.

**Revendications**

1. Dispositif d'étanchéité pour rendre. étanches deux tubes métalliques coaxiaux alignés longitudinalement dans un système sous vide poussé comprenant un joint d'étanchéité tubulaire qui est formé par une matière métallique retrouvant sa forme sous l'effet de la chaleur et qui s'étend axialement sur les parties d'extrémité des tubes alignés, ledit joint d'étanchéité tubulaire comportant des lèvres circonférentielles intégrées faisant saillie et dimensionnées de manière telle qu'elles portent contre lesdits tubes coaxiaux lors de la transformation dudit joint d'étanchéité tubulaire de l'état martensitique à l'état austénitique, caractérisé par le fait que ledit joint tubulaire est constitué par une partie (20) constituant une membrane et comportant des parties (22), constituant des bagues de réaction, formées aux extrémités de ladite membrane (20) en alignement dans la même plan avec lesdites lèvres (24) mais sur le côté radialement opposé, lesdites bagues de réaction (22) ayant une épaisseur plus grande que la membrane intermédiaire (20) dudit joint d'étanchéité de manière à pouvoir fournir une pression suffisante pour déformer de façon plastique les parties du tube contre lesquelles portent lesdites lèvres (24).

2. Dispositif suivant la revendication 1, dans lequel lesdits tubes coaxiaux ont des diamètres intérieurs similaires, caractérisé par le fait que ledit joint tubulaire est disposé à l'intérieur des parties d'extrémité du tube (82, 84) avec lesdites lèvres en contact circonférentiellement avec les surfaces intérieures desdits tubes (82, 84).

3. Dispositif suivant l'une quelconque des revendications 1 ou 2, caractérisé par le fait que des bagues de commande (64) en une matière métallique reprenant sa forme sous l'effet de la chaleur sont disposées autour desdites bagues de réaction (66), et agissant de concert avec lesdites bagues de réaction (66), lesdites bagues de commande et lesdites bagues de réaction (64, 66) exerçant toutes deux, lorsqu'elles sont dans un état austénitique des forces de compression suffisantes telles que la somme de ces forces puisse faire pénétrer lesdites lèvres (68) de ladite bague de réaction (66) dans ledit tube (62) en déformant de façon plastique lesdits tubes (62) se trouvant à l'intérieur de ladite bague.

4. Appareil suivant la revendication 3, caractérisé par le fait que le rapport entre la superficie de section droite axiale desdites bagues de commande (64) et la superficie de section droite axiale desdites bagues de réaction (66) est d'environ 2:1.

5. Dispositif d'étanchéité suivant la revendication 1, dans lequel un premier desdits tubes s'étend dans le second tube, caractérisé par le fait que ledit premier tube (114) comporte une lèvre d'étanchéité (118, 120) faisant saillie vers l'extérieur et que ledit second tube (116) comporte une lèvre d'étanchéité (122) faisant saillie vers l'intérieur, et une bague d'étanchéité en un métal retrouvant sa forme sous

**0 004 696**

l'effet de la chaleur et disposé concentriquement entre lesdits premier et second tubes.

6. Dispositif d'étanchéité suivant la revendication 5, caractérisé par le fait que ledit premier tube (114) comporte deux lèvres d'étanchéité (118, 120) faisant saillie radialement vers l'extérieur et disposées latéralement sur les côtés opposés de la lèvre d'étanchéité (122) que comporte le second tube (116) et qui s'étend radialement vers l'intérieur et une ouverture (124) s'étendant à travers la paroi dudit premier tube (114) entre lesdites lèvres d'étanchéité (118, 120) faisant saillie vers l'extérieur; ladite bague d'étanchéité (112) étant disposée concentriquement entre lesdits premier et second tubes (114, 116) s'étendant axialement au-delà de chacune desdites lèvres d'étanchéité (118, 120) faisant saillie vers l'extérieur.

7. Dispositif selon la revendication 6, caractérisé par le fait que ledit second tube (116) comporte un épaulement intérieur (132) et ledit premier tube comporte un épaulement extérieur (130), lesdites tubes (116, 114) pouvant être disposés de manière telle que lesdits épaulements se trouvent en contact avec les extrémités opposées de ladite bague d'étanchéité (142) de manière à positionner convenablement ladite bague d'étanchéité (114).

8. Dispositif d'étanchéité selon la revendication 5, caractérisé par le fait que lesdites lèvres d'étanchéité (148, 150) faisant saillie vers l'intérieur et vers l'extérieur sont disposées dans un seul plan.

FIG.1

FIG.2

FIG.3

FIG.4A
AS MACHINED, UNRESTRAINED
(AUSTENITE)

INTERFERENCE

LIP I.D.

LIP ROOT
DIAMETER

RING FACE
DIAMETER

FIG.4B
CLEARANCE

CHILLED AND MECHANICALLY
EXPANDED (MARTENSITE)

0 004 696

FIG.6

40

44

FIG.IO

80

84

82

FIG.5

42

46

40

VI

VI

48

44

FIG.9

70

60

68

62

64

66

A - AUSTENITIC STATE
M - MARTENSITIC STATE

A - AUSTENITIC STATE
M - MARTENSITIC STATE

FIG.8

I.D. SMALLER
THAN INSTALLED

CHILL AND EXPAND

I.D. ENLARGED

≈1% CLEARANCE

LIP I.D.
LARGER THAN
INSTALLED

CHILL AND
ASSEMBLE

INSTALL
OVER
TUBE

≈5%
CLEARANCE

HEAT
DRIVER

HEAT
SEAL

SEALED

CHILL

HEAT
SEAL

SEALED

FIG.7

0 004 696

FIG. 11

122 112 116
130
132
120 126 124 118
114
110
128

FIG. 12

122 112 116
130
132
120 126 124 118
114
110
128

FIG. 13

148
146
142
154
152
144
150
160
140

FIG. 14

158
156

0 004 696